# EUROPÄISCHE PATENTSCHRIFT

(11) **EP 1 620 602 B1**
(45) Veröffentlichungstag und Bekanntmachung des Hinweises auf die Patenterteilung: **14.07.2010**
(21) Anmeldenummer: 04729648.8
(22) Anmeldetag: 27.04.2004
(51) Int. Cl.: D21H 21/42

(54) **FLÄCHIGES SICHERHEITSELEMENT UND HERSTELLUNGSVERFAHREN FÜR DASSELBE**
PLANAR SECURITY ELEMENT AND METHOD FOR THE PRODUCTION THEREOF
ELEMENT DE SECURITE PLAN ET SON PROCEDE DE FABRICATION

(30) Priorität: 28.04.2003 DE 10319232
(43) Veröffentlichungstag der Anmeldung: 01.02.2006
(73) Patentinhaber: Giesecke & Devrient GmbH, 81677 München (DE)
(72) Erfinder: HEIM, Manfred, 81543 München (DE)
(74) Vertreter: Metzler, Volker
(86) Internationale Anmeldenummer: PCT/EP2004/004438
(87) Internationale Veröffentlichungsnummer: WO 2004/097112

(56) Entgegenhaltungen:
- EP-A- 0 330 733
- WO-A-01/03945
- WO-A-2004/028824
- DE-A- 19 941 295
- GB-A- 2 325 883
- US-A- 4 705 356
- US-A- 5 961 432
- US-A- 6 157 489
- US-B1- 6 616 803

## Beschreibung

Die Erfindung betrifft ein flächiges Sicherheitselement für Sicherheitspapiere, Wertdokumente und dergleichen, ein Sicherheitspapier für die Herstellung von Sicherheitsdokumenten sowie ein Wertdokument mit einem solchen Sicherheitselement. Insbesondere betrifft die Erfindung ein Sicherheitselement in Form eines Sicherheitsstreifens oder eines Sicherheitsfadens zur Einlagerung in ein Sicherheitsdokument, oder in Form eines Transferelements zum Aufbringen auf ein Sicherheitspapier, Wertdokument und dergleichen.

Aus der Druckschrift WO 95/10420 ist ein Wertdokument bekannt, in das nach seiner Herstellung eine durchgehende Öffnung gestanzt wird, die anschließend mit einer die Öffnung allseits überragenden Abdeckfolie einseitig verschlossen wird. Da die Abdeckfolie zumindest in Teilbereichen transparent ist, scheint der Untergrund beim Kopieren des Wertdokuments durch und macht die Kopie somit als solche erkennbar. Die Abdeckfolie kann auch ein Sicherheitsmerkmal, wie etwa ein Hologramm, aufweisen.

Ein allgemeines Problem bei der Herstellung von Sicherheitselementen besteht darin, dass Standard-Hologramme mit einer Aluminium-Reflexionsschicht zunehmend freier verfügbar werden. Der Sicherheitsstandard derartiger Standard-Hologramme und der damit ausgestatteten Wertdokumente verringert sich daher zunehmend.

Die WO 01/03945 A1 offenbart einen Sicherheitsgegenstand mit einem lichtdurchlässigen Trägermaterial, das mit einem optischen Interferenzmuster versehen ist und zudem mit einer farbveränderlichen optischen Beschichtung, wobei die optische Beschichtung bei Änderung des Lichteinfallswinkels oder des Betrachtungswinkels eine beobachtbare Farbveränderung bewirkt.

Ausgehend davon liegt der Erfindung die Aufgabe zugrunde, ein Sicherheitselement anzugeben, das gegenüber dem Stand der Technik eine erhöhte Fälschungssicherheit aufweist.

Diese Aufgabe wird durch das flächige Sicherheitselenient mit den Merkmalen des Hauptanspruchs gelöst. Ein Sicherheitspapier für die Herstellung von Sicherheitsdokumenten und ein Wertdokument mit einem solchen Sicherheitselement sowie Herstellungsverfahren für ein solches Sicherheitselement sind Gegenstand der nebengeordneten Ansprüche. Weiterbildungen der Erfindung sind Gegenstand der Unteransprüche.

Das erfindungsgemäße Sicherheitselement enthält zumindest zwei unterschiedliche, übereinander angeordnete, flächige Sicherheitsmerkmale, die jeweils bei Betrachtung des Sicherheitselements von gegenüberliegenden Seiten her erkennbar sind, wobei das erste Sicherheitsmerkmal ein mit einer flächigen Beugungsstruktur in Form eines Hologramms versehenes Dünnschichtelement mit Farbkippeffekt aufweist, das eine erste Reflexionsschicht mit einer ersten Farbwirkung enthält. Das zweite Sicherheitsmerkmal weist eine mit einer flächigen Beugungsstruktur in Form eines Hologramms zur Erzeugung eines beugungsoptischen Bildes versehene zweite Reflexionsschicht auf, die eine zweite, von der ersten Farbwirkung verschiedene Farbwirkung zeigt. Das Dünnschichtelement des ersten Sicherheitsmerkmals und die Reflexionsschicht des zweiten Sicherheitsmerkmals sind dabei mit derselben flächigen Beugungsstruktur in Form eines Hologramms versehen.

Mehrschichtige Dünnschichtelemente stellen an sich bekannte Sicherheitsmerkmale bei Sicherheitselementen dar. Der Farbeindruck des Dünnschichtelements ändert sich mit dem Betrachtungswinkel beispielsweise von Grün nach Blau, von Blau nach Magenta oder von Magenta nach Grün. Dieser Farbeffekt beruht auf Interferenzeffekten aufgrund von Mehrfachreflexionen in den verschiedenen Teilschichten des Dünnschichtelements und ist beispielsweise in der Druckschrift EP 0 395 410 B1 im Detail erläutert. Derartige Farbänderungen werden im Folgenden als Farbkippeffekt oder Color-Shift Effekt bezeichnet. Obwohl Sicherheitselemente mit Farbkippeffekt grundsätzlich bereits bekannt sind, besteht ein Bedarf an weiter verbesserten und eine höhere Fälschungssicherheit bietenden Sicherheitselementen.

Nach der Erfindung wird dazu ein Sicherheitsmerkmal mit einer in Reflexion beobachtbaren flächigen Beugungsstruktur in Form eines Hologramms durch ein weiteres Sicherheitsmerkmal mit Farbkippeffekt ergänzt, das mit derselben flächigen Beugungsstrktur in Form eines Hologramms versehen ist. Bei Betrachtung des Sicherheitselements von der Seite des einen Sicherheitsmerkmals her ist dann ein beugungsoptisches Bild mit Farbkippeffekt erkennbar, bei Betrachtung des Sicherheitselements von der Seite des anderen Sicherheitsmerkmals her ein beugungsoptisches Bild mit dem Farbeindruck der zweiten Reflexionsschicht. Das Sicherheitselement ist gegenüber bekannten Sicherheitselementen somit erheblich schwerer nachstellbar. Darüber hinaus stellt die vorgeschlagene Gestaltung ein optisch ansprechendes Erkennungsmerkmal dar, das auch von einem Laien leicht erkannt und als echt bewertet werden kann.

Das Dünnschichtelement des ersten Sicherheitsmerkmals enthält mit Vorteil neben der ersten Reflexionsschicht eine Interferenzschicht mit Farbkippeffekt. Insbesondere weist die Interferenzschicht vorzugsweise zumindest eine Absorberschicht und mindestens eine Dielektrikumsschicht auf, die zwischen der ersten Reflexionsschicht und der Absorberschicht angeordnet ist. Dabei können auch mehrere Absorberschichten und Dielektrikumsschichten alternierend übereinander angeordnet sein. Anstelle der alternierenden Abfolge von Absorber- und Dielektrikumsschichten kann auch eine alternierende Abfolge von Dielektrikumsschichten mit hohem bzw. niedrigem Brechungsindex vorgesehen sein. Der Farbkippeffekt ist dann um so ausgeprägter, je größer der Unterschied der Brechungsindizes benachbarter Dielektrikumsschichten gewählt wird bzw. je mehr Schichten mit abwechselnd hohem und niedrigem Brechungsindex bei geeigneten Schichtdicken übereinander angeordnet sind.

Die Absorberschichten sind typischerweise durch dünne Metallschichten mit einer Dicke von 4 nm bis 20 nm gebildet. Als Metalle kommen insbesondere Chrom, Eisen, Gold, Aluminium oder Titan, aber auch seltenere Metalle, wie Vanadium, Palladium oder Molybdän, infrage. Darüber hinaus können beispielsweise auch Nickel, Kobalt, Wolfram, Niob oder Verbindungen und Legierungen der genannten Metalle, wie etwa Nickel-Chrom-Eisen, verwendet werden. Weitere geeignete Materialien für die Absorberschichten sind in der Druckschrift WO 01/03945 angegeben, deren Offenbarung insoweit in die vorliegende Anmeldung einbezogen wird.

Für die Dielektrikumsschichten kommen insbesondere aufdampfbare und durchsichtige Materialien in Frage. Geeignete Materialien mit Brechungsindex kleiner 1,7 sind beispielsweise Siliziumdioxid, Aluminiumoxid, Magnesiumfluorid oder SiOₓ, mit 1 < x < 2. Auch Materialien mit höherem Brechungsindex, wie etwa Zirkonoxid, Zinksulfid, Titandioxid oder Indium-Zinn-Oxid, können verwendet werden. Auch für die Dielektrikumsschichten können weitere geeignete Materialien der Druckschrift WO 01/03945 entnommen werden und deren Offenbarung wird insoweit in die vorliegende Anmeldung einbezogen. Die Dielektrikumsschichten weisen typischerweise eine Schichtdicke von etwa 100 nm bis etwa 1000 nm, bevorzugt von etwa 200 nm bis etwa 500 nm auf.

Bevorzugt ist die erste Reflexionsschicht und/oder die zweite Reflexionsschicht durch eine Metallschicht gebildet. Insbesondere sind die erste und zweite Reflexionsschicht mit Vorteil durch verschiedenfarbige Metalle gebildet, wobei es besonders vorteilhaft ist, wenn die erste Reflexionsschicht durch ein im sichtbaren Spektralbereich hochreflektierendes Metall und die zweite Reflexionsschicht durch ein im sichtbaren Spektralbereich schlecht reflektierendes Metall gebildet sind. Im Allgemeinen ist der Farbkippeffekt um so auffälliger, je höher der Reflexionskoeffizient der ersten Reflexionsschicht gewählt ist.

In einer bevorzugten Ausgestaltung des Sicherheitselements ist die erste Reflexionsschicht aus einem Metall der Gruppe Aluminium, Silber oder Nickel gebildet. Die zweite Reflexionsschicht ist vorteilhaft aus einem Metall der Gruppe Kupfer, Gold, Eisen oder Chrom gebildet. Die verschiedenen Farben der verwendeten Metalle erlauben dann reizvolle optische Kontraste beim Betrachten des Sicherheitselements, die weiter unten im Detail beschrieben werden. Zweckmäßig sind die erste und zweite Reflexionsschicht unmittelbar übereinander angeordnet

Die Absorberschichten, die Dielektrikumsschichten und die Reffexionsschichten werden bevorzugt in einem Vakuumbedampfungsverfahren auf einen Träger aufgebracht. Der Träger kann beispielsweise durch eine mit einer Beugungsstruktur in Form eines Hologramms versehene Prägelackschicht gebildet sein, welche einen Bestandteil des fertigen Sicherheitselements bildet. Die Schichten können auch auf einem Zwischenträger erzeugt werden, der bei Fertigstellung des Sicherheitselements oder spätestens beim Auf- oder Einbringen des Sicherheitselements in einen Gegenstand entfernt wird. Als Bedampfungsverfahren kommen beispielsweise PVD-Verfahren, wie Schiffchembedampfung, Bedampfung durch Widerstands- oder Induktionsheizung, AC- und DC-Sputterverfahren, Elektronenstrahl- oder Lichtbogenbedampfung, aber auch CVD-Verfahren, wie Sputtern in einem reaktiven Plasma oder andere plasmaunterstützte Bedampfungsverfahren, in Betracht.

Gemäß einer bevorzugten Weiterbildung weist das erste und/oder zweite Sicherheitsmerkmal des flächigen Sicherheitselements Aussparungen in Form von Mustern, Zeichen oder Codierungen auf. Die Aussparungen können beispielsweise in Form alphanumerischer Zeichen oder Ziffern in Positiv- oder Negativschrift, aber auch in Form beliebiger Bilddarstellungen ausgebildet sein. Eine derartige Kennung stellt ein weiteres Sicherheitsmerkmal dar, das die Fälschungssicherheit des Sicherheitselements weiter erhöht und das sich dem Betrachter ansprechend und mit auch für den Laien leicht erfassbaren optischen Wirkungen präsentiert.

In einer ersten vorteilhaften Ausgestaltung weist die zweite Reflexionsschicht Aussparungen in Form von Mustern, Zeichen oder Codierungen auf. Insbesondere ist dann bei Betrachtung des Sicherheitselements von der Seite des ersten Sicherheitsmerkmals her ein beugungsoptisches Bild in Kombination mit einem Farbkippeffekt erkennbar. Bei Betrachtung des Sicherheitselements von der Seite des zweiten Sicherheitsmerkmals her ist ein beugungsoptisches Bild mit dem zweiten Farbeindruck in den nicht ausgesparten Bereichen, und mit dem ersten Farbeindruck in den Aussparungen der zweiten Reflexionsschicht erkennbar.

Da das Dünnschichtelement des ersten Sicherheitsmerkmals und die Reflexionsschicht des zweiten Sicherheitsmerkmals dieselbe Beugungsstruktur in Form eines Hologramms aufweisen, rekonstruieren die zweite Reflexionsschicht und die durch die Aussparungen der zweiten Reflexionsschicht erkennbare erste Reflexionsschicht dasselbe beugungsoptische Bild. Die verschiedenen Farbeindrücke innerhalb des beugungsoptischen Bildes vermitteln dabei einen ansprechenden optischen Eindruck.

Nach einer anderen vorteilhaften Ausgestaltung, bei der das Dünnschichtelement neben der ersten Reflexionsschicht eine Interferenzschicht mit Farbkippeffekt aufweist, ist die Interferenzschicht mit Aussparungen in Form von Mustern, Zeichen oder Codierungen versehen. Diese können alternativ oder zusätzlich zu den oben beschriebenen Aussparungen der zweiten Reflexionsschicht ausgebildet sein. Insbesondere ist bei Betrachtung des Sicherheitselements von der Seite des ersten Sicherheitsmerkmals her dann in den nicht ausgesparten Bereichen ein beugungsoptisches Bild in Kombination mit einem Farbkippeffekt und in den Aussparungen der Interferenzschicht der Farbeindruck der ersten Reflexionsschicht ohne Farbkippeffekt erkennbar. Bei Betrachtung des Sicherheitselements von der Seite des zweiten Sicherheitsmerkmals her ist ein seitenvertauschtes beugungsoptisches Bild mit dem zweiten Farbeindruck erkennbar.

Nach einer weiteren vorteilhaften Ausgestaltung, bei der das Dünnschichtelement wiederum neben der ersten Reflexionsschicht eine Interferenzschicht mit Farbkippeffekt aufweist, sind die erste Reflexionsschicht und die Interferenzschicht mit deckungsgleichen Aussparungen in Form von Mustern, Zeichen oder Codierungen versehen. Insbesondere ist bei Betrachtung des Sicherheitselements von der Seite des ersten Sicherheitsmerkmals her dann in den nicht ausgesparten Bereichen ein beugungsoptisches Bild in Kombination mit einem Farbkippeffekt und in den Aussparungen der Interferenzschicht und der ersten Reflexionsschicht der Farbeindruck der zweiten Reflexionsschicht ohne Farbkippeffekt erkennbar. Bei Betrachtung des Sicherheitselements von der Seite des zweiten Sicherheitsmerkmals her ist ein seitenvertauschtes beugungsoptisches Bild mit dem zweiten Farbeindruck erkennbar.

Die erste Reflexionsschicht und die zweite Reflexionsschicht weisen gemäß einer weiteren vorteilhaften Ausgestaltung deckungsgleiche Aussparungen in Form von Mustern, Zeichen oder Codierungen auf. Dadurch kann insbesondere erreicht werden, dass bei Betrachtung des Sicherheitselements von der Seite des ersten Sicherheitsmerkmals her ein beugungsoptisches Bild in Kombination mit einem Farbkippeffekt und im Durchlicht transparente oder semitransparente Aussparungen erkennbar sind. Bei Betrachtung des Sicherheitselements von der Seite des zweiten Sicherheitsmerkmals her ist ein seitenvertauschtes beugungsoptisches Bild mit dem zweiten Farbeindruck mit im Durchlicht transparenten oder semitransparenten Aussparungen erkennbar. Die Transparenz der Aussparungen richtet sich dabei nach der Schichtabfolge, der Materialzusammensetzung und der Dicke des Dünnschichtelements. Dadurch können je nach Bedarf gezielt möglichst transparente Aussparungen oder in bestimmten Farben getönte Aussparungsbereiche erzeugt werden.

In einer weiteren bevorzugten Ausgestaltung weist die erste Reflexionsschicht Aussparungen in Form von Mustern, Zeichen oder Codierungen auf. Insbesondere ist dann bei Betrachtung des Sicherheitselements von der Seite des ersten Sicherheitsmerkmals her ein beugungsoptisches Bild in Kombination mit einem Farbkippeffekt mit zusätzlichen Farbeffekten in den Aussparungen erkennbar, da der Reflektor des Dünnschichtelementes teilweise durch die erste und teilweise durch die zweite Reflexionsschicht gebildet ist. Da sich der Farbeindruck und die Reflexionseigenschaften der beiden Reflexionsschichten unterscheiden, ist der Farbkippeffekt mit dem Muster der Aussparung moduliert. Je unterschiedlichere Materialien für die beiden Reflexionsschichten gewählt werden, um so deutlicher ist die Modulation des Farbkippeffekts erkennbar. Bei Betrachtung des Sicherheitselements von der Seite des zweiten Sicherheitsmerkmals her ist ein seitenvertauschtes beugungsoptisches Bild mit dem zweiten Farbeindruck erkennbar.

Es versteht sich, dass all die genannten Aussparungen in den verschiedenen Schichten oder Schichtenfolgen miteinander kombiniert werden können, um gleichzeitig verschiedenartige optische Effekte in dem Sicherheitselement zu erzeugen. Die in verschiedenen Schichten vorliegenden Aussparungen können nebeneinander - also nicht überlappend - vorliegen, vorzugsweise teilweise überlappend, besonders bevorzugt deckungsgleich vorliegen.

Die flächigen Sicherheitsmerkmale des Sicherheitselements sind in einer vorteilhaften Weiterbildung auf einer gemeinsamen Trägerfolie, insbesondere einer transparenten Trägerfolie aufgebracht.

Das erfindungsgemäße Sicherheitselement insbesondere kann überall dort sinnvoll eingesetzt werden, wo es von gegenüberliegenden Seiten her betrachtet werden kann. So kann es in oder über einer Öffnung eines Sicherheitspapiers oder eines Wertdokuments, oder in oder über einem transparenten Bereich solcher Dokumente angeordnet sein. Öffnungen und transparente Bereiche gemeinsam werden nachfolgend als Fensterbereiche eines Dokuments bezeichnet.

Ebenso ist es möglich, dass das Sicherheitselement als Sicherheitsstreifen, oder als Sicherheitsfaden, etwa als Fenstersicherheitsfaden oder als Pendelsicherheitsfaden, eingesetzt wird. Bei Letzterem tritt das Sicherheitselement abwechselnd an der Vorder- und Rückseite des einbettenden Dokuments an die Oberfläche und kann somit von beiden Seiten betrachtet werden. Der Schichtaufbau solcher Sicherheitsfäden wird zweckmäßig mit einer Kaschierfolie geschützt.

In einer anderen zweckmäßigen Ausgestaltung bildet das Sicherheitselement ein Transferelement zum Aufbringen auf ein Sicherheitspapier, Wertdokument und dergleichen. Die flächigen Sicherheitsmerkmale eines solchen Transferelements sind zweckmäßig über eine Trennschicht auf einer Transferfolie aufgebracht.

Die Erfindung umfasst auch ein Sicherheitspapier für die Herstellung von Sicherheitsdokumenten, wie Banknoten, Ausweiskarten oder dergleichen, mit einem oben beschriebenen Sicherheitselement. Das Sicherheitspapier kann wenigstens einen durchgehenden Fensterbereich enthalten, der mit dem Sicherheitselement bedeckt ist, so dass im Fensterbereich die zwei flächigen Sicherheitsmerkmale bei Betrachtung von gegenüberliegenden Seiten her erkennbar sind.

Die Erfindung enthält weiter ein Wertdokument, wie eine Banknote, eine Ausweiskarte oder dergleichen, das mit einem oben beschriebenen Sicherheitselement versehen ist. Das Wertdokument kann wenigstens einen durchgehenden Fensterbereich enthalten, der mit dem Sicherheitselement bedeckt ist, so dass im Fensterbereich die zwei flächigen Sicherheitsmerkmale bei Betrachtung von gegenüberliegenden Seiten her erkennbar sind.

Das erfindungsgemäße Sicherheitselement oder ein damit versehenes Sicherheitspapier oder Wertdokument können beispielsweise zur Sicherung von Waren beliebiger Art eingesetzt werden.

Ein Verfahren zur Herstellung eines flächigen Sicherheitselements für Sicherheitspapiere, Wertdokumente und dergleichen, umfasst die Verfahrensschritte:
a) Herstellen einer Prägelackschicht mit einer flächigen Beugungsstruktur in Form eines Hologramms;
b) Aufbringen eines Dünnchichtelelements mit Farbkippeffekt auf die Prägelackstruktur, welches eine erste Reflexionsschicht mit einer ersten Farbwirkung enthält, so dass sich die Beugungsstruktur der Prägelackschicht in Form eines Hologramms in dem Dünnschichtelement fortsetzt, und
c) Aufbringen einer zweiten Reflexionsschicht mit einer zweiten, von der ersten Farbwirkung verschiedenen Farbwirkung auf das Dünnschichtelement, so dass sich die Beugungsstruktur der Prägelackschicht und des Dünnschichtelements in Form eines Hologramms in der zweiten Reflexionsschicht fortsetzt.

Das Aufbringen des Dünnschichtelements erfolgt dabei vorteilhaft dadurch, dass nacheinander eine Absorberschicht, eine dielektrische Schicht und die erste Reflexionsschicht aufgebracht werden. Insbesondere werden die genannten Schichten mit einem Vakuumbedampfungsverfahren auf der Prägelackstruktur abgeschieden. Die zweite Reflexionsschicht wird in einer bevorzugten Verfahrensvariante direkt auf die erste Reflexionsschicht aufgebracht.

Zur weiteren Erhöhung der Fälschungssicherheit werden besonders bevorzugt Aussparungen in Form von Mustern, Zeichen oder Codierungen in das Dünnschichtelement, insbesondere in die erste Reflexionsschicht und/oder in die zweite Reflexionsschicht eingebracht.

Ein alternatives Verfahren zur Herstellung eines flächigen Sicherheitselements für Sicherheitspapiere, Wertdokumente und dergleichen umfasst die Verfahrensschritte:
α) Herstellen einer Prägelackschicht mit einer flächigen Beugungsstruktur in Form eines Hologramms,
β) Aufbringen einer Reflexionsschicht mit einer vorbestimmten Farbwirkung auf die Prägelackstruktur, so dass sich die Beugungsstruktur der Prägelackschicht in Form eines Hologramms in der Reflexionsschicht fortsetzt, und
χ) Aufbringen eines Dünnschichtelements mit Farbkippeffekt auf die Reflexionsschicht, welches eine weitere Reflexionsschicht mit einer weiteren, von der vorbestimmten Farbwirkung der zuerst aufgebrachten Reflexionsschicht verschiedenen Farbwirkung enthält, so dass sich die Beugungsstruktur der Prägelackschicht und der zuerst aufgebrachten Reflexionsschicht in Form eines Hologramms in dem Dünnschichtelement fortsetzt.

Bei diesem Herstellungsverfahren erfolgt das Aufbringen des Dünnschichtelements vorteilhaft dadurch, dass nacheinander die weitere Reflexionsschicht, eine dielektrische Schicht und eine Absorberschicht aufgebracht werden. Die weitere Reflexionsschicht wird dabei vorzugsweise direkt auf die zuerst aufgebrachte Reflexionsschicht aufgebracht. Anschließend kann die Schichtenfolge über eine Trennschicht auf eine Transferfolie aufgebracht werden.

Auch hier werden bevorzugt zur weiteren Erhöhung der Fälschungssicherheit in die zuerst aufgebrachte Reflexionsschicht und/oder in das Dünnschichtelement, insbesondere in die weitere Reflexionsschicht, Aussparungen in Form von Mustern, Zeichen oder Codierungen eingebracht.

Bei bestimmten Ausführungsformen, insbesondere dann, wenn die direkt übereinander liegende erste und zweite Reflexionsschicht zur Lokalelementbildung und damit zur Korrosion neigen könnten, wird zwischen beide Reflexionsschichten eine Abstandsschicht eingebracht. Die Abstandsschicht besteht z.B. aus Oxidschichten, wie MgF₂, SiO₂, SiOₓ oder ZnS, und wird vorzugsweise aufgedampft. Vorzugsweise ist die Abstandsschicht sehr dünn, so dass sich im Sicherheitselement vorhandene Beugungsstrukturen in Form von Hologrammen in den anderen Schichten exakt abbilden. Die Abstandsschicht ist insbesondere höchstens 500 nm dick.

Die Abstandsschicht kann auch aus einem Mehrschichtverbund bestehen, insbesondere um die Haftungseigenschaften zwischen der ersten Reflexionssschicht, der Abstandsschicht und der zweiten Reflexionsschicht optimal einzustellen. Als Mehrschichtverbund eignet sich beispielsweise eine Schichtabfolge von einer wenige nm dicken Chromschicht über einer SiO₂-Schicht, die wieder über einer wenige nm dicken Chromschicht liegt.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit eingebette- tem Sicherheitsfaden und aufgeklebtem Transferelement, je- weils nach einem Ausführungsbeispiel der Erfindung,
- Fig. 2: einen Schnitt durch die Banknote von Fig.1 entlang der Linie II-II,
- Fig. 3: den Schichtaufbau eines Sicherheitselements nach einem Aus- führungsbeispiel der Erfindung,
- Fig. 4: den Schichtaufbau eines Transferelements wie in Fig.1 nach einem Ausführungsbeispiel der Erfindung, und
- Fig. 5 bis 9: verschiedene Gestaltungen eines Sicherheitselements mit Aus- sparungen nach bevorzugten Ausführungsbeispielen der Erfin- dung.

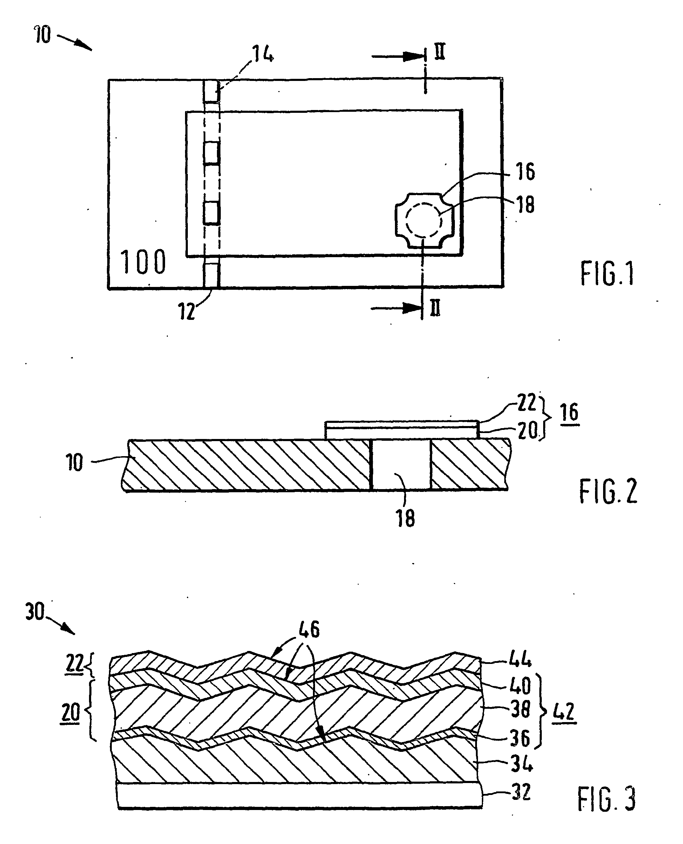

Figur 1 zeigt eine schematische Darstellung einer Banknote 10, die mit einem eingebetteten Pendelsicherheitsfaden 12 und einem aufgeklebten Transferelement 16, beide nach einem Ausführungsbeispiel der Erfindung, versehen ist. Der Pendelsicherheitsfaden 12 tritt an bestimmten Bereichen 14 an der Vorderseite der Banknote 10 an die Oberfläche. In anderen, in der Figur gestrichelt eingezeichneten Bereichen greift er durch das Banknotenpapier hindurch und tritt an der Rückseite der Banknote an die Oberfläche.

Die Banknote 10 weist auch eine durchgehende, gestanzte Öffnung 18 auf, die auf der Vorderseite von dem Transferelement 16 vollständig bedeckt ist und daher in der Fig.1 gestrichelt eingezeichnet ist. Im Querschnitt der Fig. 2, die einen Schnitt der Banknote 10 entlang der Linie II-II zeigt, sind die Öffnung 18 und die vollständige Bedeckung durch das Transferelement 16 deutlich zu erkennen. Das Transferelement 16 umfasst zwei übereinander angeordnete, unterschiedliche Sicherheitsmerkmale 20 und 22, die von gegenüberliegenden Seiten der Banknote 10 her erkennbar sind. Das erste Sicherheitsmerkmal 20 des Transferelements ist durch die Öffnung 18 von der Rückseite her erkennbar, das zweite Sicherheitsmerkmal 22 bei Betrachtung der Vorderseite der Banknote 10.

Ein möglicher Schichtaufbau für ein derartiges Transferelement 16 oder einen Sicherheitsfaden 12 und die bei Betrachtung auftretenden optischen Effekte werden nunmehr zunächst mit Bezug auf die Fig. 3 näher erläutert.

Das Sicherheitselement 30 des in Fig. 3 gezeigten Ausführungsbeispiels enthält ein Dünnschichtelement 42 mit Farbkippeffekt, das mit einer flächigen Beugungsstruktur 46 in Form eines Hologramms versehen ist und das das erste, von der Rückseite her erkennbare Sicherheitsmerkmal 20 bildet. Dabei ist auf einer Trägerfolie 32 eine Prägelackschicht 34 aufgebracht und eine Beugungsstruktur 46 in Form eines Hologramms in die Prägelackschicht eingeprägt. Auf die Prägelackschicht 34 sind dann eine Absorberschicht 36, eine Dielektrikumsschicht 38 und eine Reflexionsschicht 40 aus Aluminium aufgebracht. Die Beugungsstruktur 46 der Prägelackschicht 34 in Form eines Hologramms setzt sich dabei in den Schichten 36, 38 und 40 vertikal nach oben fort. Die Absorberschicht 36, die Dielektrikumsschicht 38 und die Reflexionsschicht 40 bilden zusammen ein Dünnschichtelement 42 mit Farbkippeffekt, dessen genaue Wirkungsweise beispielsweise in der Druckschrift EP 0 395 410 B1 beschrieben ist.

Bei Betrachtung des Sicherheitselements 30 von der Seite des ersten Sicherheitsmerkmals 20 her ist dann ein durch die Beugungsstruktur 46 in Form eines Hologramms erzeugtes beugungsoptisches Bild in Kombination mit einem Farbkippeffekt zu erkennen.

Auf die Reflexionsschicht 40 des Dünnschichtelements 42 ist als zweites Sicherheitsmerkmal 22 eine weitere Reflexionsschicht 44, im Ausführungsbeispiel eine Kupferschicht, aufgebracht. Die Beugungsstruktur 46 der Prägelackschicht 34 und des Dünnschichtelements 42 in Form eines Hologramms setzt sich in der Reflexionsschicht 44 vertikal fort, so dass bei Betrachtung des Sicherheitselements 30 von der Seite des zweiten Sicherheitsmerkmals 22 her ein durch die Beugungsstruktur 46 in Form eines Hologramms erzeugtes beugungsoptisches Bild in der charakteristischen Farbe der Reflexionsschicht 44, im Ausführungsbeispiel also ein kupferfarbenes Beugungsbild, zu erkennen ist.

Da das Dünnschichtelement 42 und die Reflexionsschicht 44 dieselbe flächige Beugungsstruktur 46 in Form eines Hologramms aufweisen, erzeugen sie gleiche beugungsoptische Bilder, die allerdings aufgrund der einander entgegengesetzten Betrachtungsrichtungen seitenvertauscht sind.

Anstelle von Aluminium kommt für die erste Reflexionsschicht 40 auch ein anderes, im sichtbaren Spektralbereich hochreflektierendes Metall, wie beispielsweise Silber oder Nickel, in Betracht. Für die zweite Reflexionsschicht 44 können anstelle von Kupfer beispielsweise auch Gold, Eisen oder Chrom verwendet werden. Es versteht sich, dass die Reihenfolge des ersten und zweiten Sicherheitsmerkmals auch vertauscht werden kann.

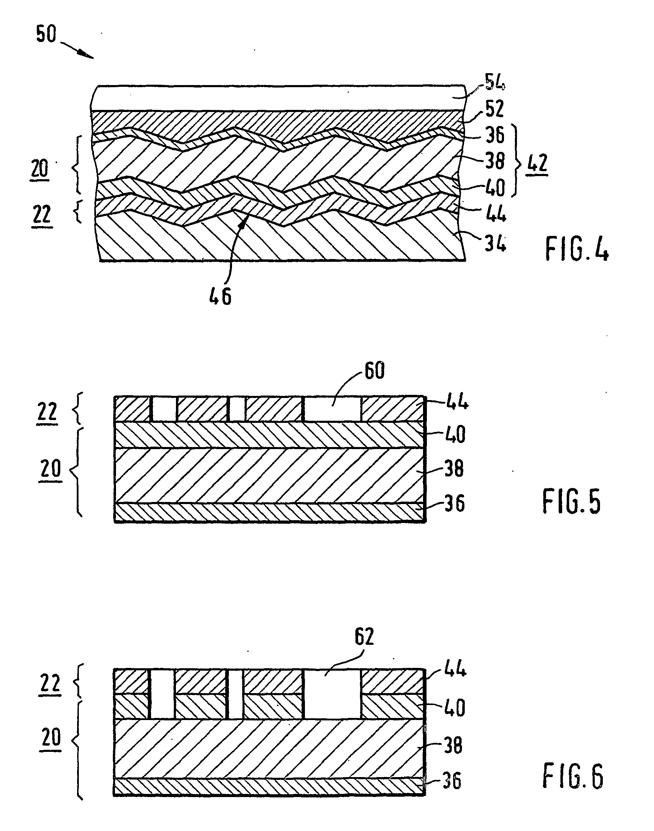

Ein anderer Schichtaufbau für ein erfindungsgemäßes Transferelement 50 wird nun mit Bezug auf die Fig. 4 illustriert. Bei diesem Ausführungsbeispiel wird auf eine mit einer Beugungsstruktur 46 in Form eines Hologramms versehene Prägelackschicht 34 zunächst eine Kupferschicht 44 aufgebracht, in die sich die Beugungsstruktur 46 der Prägelackschicht 34 in Form eines Hologramms fortsetzt. Auf die Kupferschicht 44 wird eine Reflexionsschicht 40 aus Aluminium, eine Dielektrikumsschicht 38 und eine Absorberschicht 36 aufgebracht. Wie im Ausftlhrungsbeispiel der Fig. 3 bilden die Schichten 36, 38 und 40 zusammen ein Dünnschichtelement 42 mit Farbkippeffekt. Die Beugungsstruktur 46 der Prägelackschicht 34 und der Kupferschicht 44 in Form eines Hologramms setzt sich dabei in den Schichten des Dünnschichtelements 42 fort. Um ein Transferelement 50 zu bilden, sind die beiden Sicherheitsmerkmale 20 und 22 über eine Klebeschicht 52 auf eine Transferfolie 54 aufgebracht.

Bei dem fertig gestellten Sicherheitselement 50 ist bei Betrachtung von der Seite des ersten Sicherheitsmerkmals 20 her ein durch die Beugungsstruktur 46 in Form eines Hologramms erzeugtes beugungsoptisches Bild in Kombination mit einem Farbkippeffekt zu erkennen und bei Betrachtung von der Seite des zweiten Sicherheitsmerkmals 22 her ein seitenvertauschtes beugungsoptisches Bild in der charakteristischen Farbe der Reflexionsschicht 44.

Die Fig. 5 bis 9 zeigen in schematischer Darstellung verschiedene Gestaltungen erfindungsgemäßer Sicherheitselemente, jeweils mit Aussparungen in unterschiedlichen Schichten des oben beschriebenen Schichtaufbaus. Der deutlichen Darstellung halber ist die Beugungsstruktur 46 in Form eines Hologramms in diesen Figuren nicht dargestellt. Es versteht sich jedoch, dass auch die Ausführungsbeispiele der Fig. 5 bis 9 mit einer durchgehenden Beugungsstruktur in Form eines Hologramms für die beiden Sicherheitsmerkmale 20, 22 versehen sind. Auch unterscheiden sich die Figuren der Übersichtlichkeit halber nur in der Gestaltung der Aussparungen und sind stets mit demselben Schichtaufbau gezeigt. Es versteht sich jedoch, dass die gezeigten Varianten mit den verschiedenen oben beschriebenen Schichtaufbauten kombiniert werden können.

Das Ausführungsbeispiel der Fig. 5 zeigt die übereinander angeordneten Sicherheitsmerkmale 20 und 22, mit einer Absorberschicht 36, einer Dielektrikumsschicht 38, einer ersten Reflexionsschicht 40 aus Aluminium sowie einer zweiten Reflexionssicht 44 aus Kupfer. Die Absorberschicht 36, die Dielektrikumsschicht 38 und die erste Reflexionsschicht 40 bilden zusammen ein Dünnschichtelement 42 mit Farbkippeffekt.

In die Kupferschicht 44 sind Ausnehmungen 60 in Form von Mustern, Zeichen oder Codierungen eingebracht. Dadurch entsteht bei Betrachtung des Sicherheitselements von der Seite des zweiten Sicherheitsmerkmals 22 her ein "Bi-Metall-Hologramm", bei dem für den Betrachter ein kupferfarbenes beugungsoptisches Bild mit silberfarbenen Beugungsstrukturen in Form von Hologrammen in den Aussparungen 60 erkennbar ist. Von der Seite des ersten Sicherheitsmerkmals 20 her ist, wie oben bereits beschrieben, ein seitenvertauschtes beugungsoptisches Bild in Kombination mit einem Farbkippeffekt erkennbar. Eine solche Gestaltung ist äußerst schwer nachstellbar und bildet ein optisch ansprechendes und leicht erklärbares Humanerkennungsmerkmal eines Wertdokuments.

Figur 6 zeigt ein anderes Ausführungsbeispiel, bei dem sich die Aussparung 62 deckungsgleich über die erste Reflexionsschicht 40 und die zweite Reflexionsschicht 44 erstrecken. Die ausgesparten Bereiche 62 bilden dann je nach Ausführung des Dünnschichtelements 42 im Durchlicht durchsichtige oder halbdurchsichtige Gebiete ohne Beugungseffekte. Insbesondere ist für den Betrachter von der Seite des ersten Sicherheitsmerkmals 20 her ein beugungsoptisches Bild in Kombination mit einem Farbkippeffekt erkennbar. Im Durchlicht sieht er transparente oder semitransparente Aussparungen 62. Bei Betrachtung des Sicherheitselements von der Seite des zweiten Sicherheitsmerkmals 22 her ist ein kupferfarbenes beugungsoptisches Bild mit im Durchlicht transparenten oder semitransparenten Aussparungen 62 erkennbar.

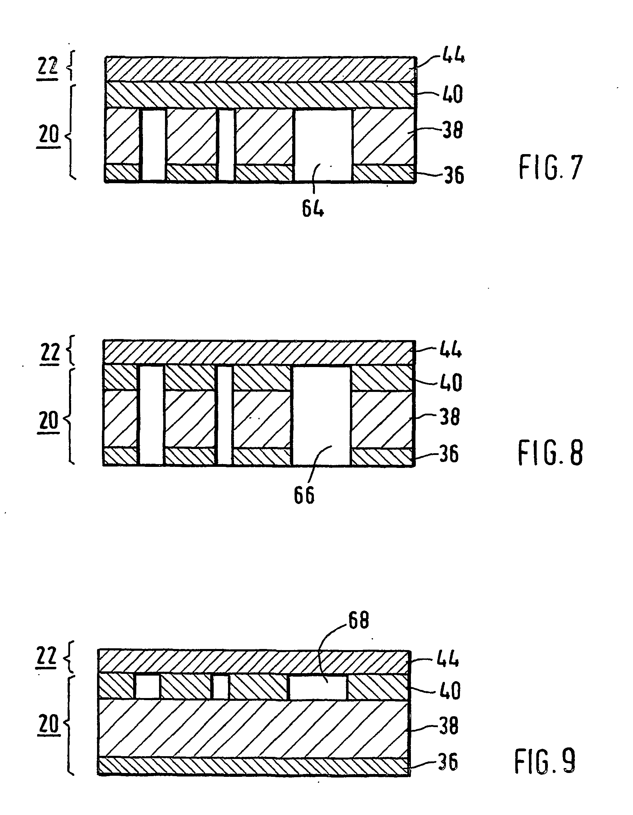

Bei dem Ausführungsbeispiel der Fig. 7 sind die Aussparungen 64 in die aus Absorberschicht 36 und Dielektrikumsschicht 38 gebildete Interferenzschicht eingebracht. Dadurch ergibt sich bei Betrachtung von der Seite des ersten Sicherheitsmerkmals 20 her in den nicht ausgesparten Bereichen ein beugungsoptisches Bild in Kombination mit einem Farbkippeffekt und in den Aussparungen 64 der silberfarbene Farbeindruck der ersten Reflexionsschicht 40 ohne Farbkippeffekt. Bei Betrachtung von der Seite des zweiten Sicherheitsmerkmals 22 her ist unverändert das kupferfarbene beugungsoptische Bild erkennbar.

In Fig. 8 erstrecken sich die Aussparungen 66 durch die Interferenzschicht 36, 38 und die erste Reflexionsschicht 40 bis zur zweiten Reflexionsschicht 44. Bei Betrachtung von der Seite des ersten Sicherheitsmerkmals 20 her ist somit in den nicht ausgesparten Bereichen ein beugungsoptisches Bild in Kombination mit einem Farbkippeffekt und in den Aussparungen 66 der kupferfarbene Farbeindruck der zweiten Reflexionsschicht 44 erkennbar. Von der Seite des zweiten Sicherheitsmerkmals 22 her ist wieder das kupferfarbene beugungsoptische Bild erkennbar.

Eine weitere Variante eines erfindungsgemäßen Sicherheitselements ist in Fig. 9 dargestellt. Dort weist lediglich die erste Reflexionsschicht 40 Aussparungen 68 in Form von Mustern, Zeichen oder Codierungen auf. Da bei dieser Variante durch die Aussparungen 68 der Reflektor des Dünnschichtelements 42 teilweise durch die kupferfarbene erste Reflexionsschicht 40 und teilweise durch die silberfarbene zweite Reflexionsschicht 44 gebildet ist, sind bei Betrachtung von der Seite des ersten Sicherheitsmerkmals 20 her neben dem beugungsoptischen Bild in Kombination mit dem Farbkippeffekt zusätzliche Farbeffekte erkennbar. Aufgrund des unterschiedlichen Farbeindrucks und der unterschiedlichen Reflexionseigenschaften der beiden Reflexionsschichten 40 und 44 ist der Farbkippeffekt mit dem Muster der Aussparung 68 moduliert. Bei Betrachtung des Sicherheitselements von der Seite des zweiten Sicherheitsmerkmals 22 her ist wieder das kupferfarbene beugungsoptische Bild erkennbar.

## Patentansprüche

1. Flächiges Sicherheitselement für Sicherheitspapiere, Wertdokumente und dergleichen, mit zumindest zwei unterschiedlichen, übereinander angeordneten, flächigen Sicherheitsmerkmalen (20, 22), die jeweils bei Betrachtung des Sicherheitselements von gegenüberliegenden Seiten her erkennbar sind, wobei
- das erste Sicherheitsmerkmal (20) ein mit einer flächigen Beugungsstruktur (46) in Form eines Hologramms versehenes Dünnschichtelement (42) mit Farbkippeffekt aufweisf, das eine erste Reflexionsschicht (40) mit einer ersten Farbwirkung enthält,
- das zweite Sicherheitsmerkmal (22) eine mit einer flächigen Beugungsstruktur (46) in Form eines Hologramms zur Erzeugung eines beugungsoptischen Bildes versehene zweite Reflexionsschicht (44) aufweist, die eine zweite, von der ersten Farbwirkung verschiedene Farbwirkung zeigt, und
wobei das Dünnschichtelement (42) des ersten Sicherheitsmerkmals (20) und die Reflexionsschicht (44) des zweiten Sicherheitsmerkmals (22) mit derselben flächigen Beugungsstruktur (46) in Form eines Hologramms versehen sind.

2. Sicherheitselement nach Anspruch 1, **dadurch gekennzeichnet, dass** das Dünnschichtelement (42) des ersten Sicherheitsmerkmals (20) neben der ersten Reflexionsschicht (40) eine Interferenzschicht (36, 38) mit Farbkippeffekt enthält.

3. Sicherheitselement nach Anspruch 2, **dadurch gekennzeichnet, dass** die Interferenzschicht zumindest eine Absorberschicht (36) und zumindest eine Dielektrikumsschicht (38) aufweist, welche zwischen der ersten Reflexionsschicht (40) und der Absorberschicht (36) angeordnet ist, vorzugsweise direkt auf der Reflexionsschicht (40) liegt.

4. Sicherheitselement nach wenigstens einem der Ansprüche 1 bis 3, **dadurch gekennzeichnet, dass** die erste Reflexionsschicht (40) und/ oder die zweite Reflexionsschicht (44) durch eine Metallschicht gebildet ist.

5. Sicherheitselement nach Anspruch 4, **dadurch gekennzeichnet, dass** die erste und zweite Reflexionsschicht durch im sichtbaren Spektralbereich signifikant unterschiedlich reflektierende Metalle gebildet sind.

6. Sicherheitselement nach Anspruch 4, **dadurch gekennzeichnet, dass** die erste und zweite Reflexionsschicht (40, 44) durch verschiedenfarbige Metalle gebildet sind.

7. Sicherheitselement nach wenigstens einem der Ansprüche 1 bis 6, **dadurch gekennzeichnet, dass** die erste Reflexionsschicht (40) aus einem Metall der Gruppe Aluminium, Silber oder Nickel gebildet ist und/oder die zweite Reflexionsschicht (44) aus einem Metall der Gruppe Kupfer, Gold, Eisen oder Chrom gebildet ist.

8. Sicherheitselement nach wenigstens einem der Ansprüche 1 bis 7, **dadurch gekennzeichnet, dass** die erste und zweite Reflexionsschicht (40, 44) unmittelbar übereinander angeordnet sind.

9. Sicherheitselement nach Anspruch 8, **dadurch gekennzeichnet, dass** zwischen der ersten und zweiten Reflexionsschicht eine Abstandsschicht, die vorzugsweise transparent oder halbtransparent ist, angeordnet ist.

10. Sicherheitselement nach wenigstens einem der Ansprüche 1 bis 9, **dadurch gekennzeichnet, dass** das erste und/oder zweite Sicherheitsmerkmal (20, 22) Aussparungen (60; 62; 64; 66; 68) in Form von Mustern, Zeichen oder Codierungen aufweist.

11. Sicherheitselement nach Anspruch 10, **dadurch gekennzeichnet, dass** die zweite Reflexionsschicht (44) Aussparungen (60) in Form von Mustern, Zeichen oder Codierungen aufweist.

12. Sicherheitselement nach Anspruch 11, **dadurch gekennzeichnet, dass** bei Betrachtung des Sicherheitselements von der Seite des ersten Sicherheitsmerkmals (20) her ein beugungsoptisches Bild in Kombination mit einem Farbkippeffekt erkennbar ist, und bei Betrachtung des Sicherheitselements von der Seite des zweiten Sicherheitsmerkmals (22) her ein seitenvertauschtes beugungsoptisches Bild mit dem zweiten Farbeindruck in den nicht ausgesparten Bereichen und mit dem ersten Farbeindruck in den Aussparungen (60) erkennbar ist.

13. Sicherheitselement nach Anspruch 2 und wenigstens einem der Ansprüche 10 bis 12, **dadurch gekennzeichnet, dass** die Interferenzschicht (36, 38) Aussparungen (64) in Form von Mustern, Zeichen oder Codierungen aufweist.

14. Sicherheitselement nach Anspruch 13, **dadurch gekennzeichnet, dass** bei Betrachtung des Sicherheitselements von der Seite des ersten Sicherheitsmerkmals (20) her in den nicht ausgesparten Bereichen ein beugungsoptisches Bild in Kombination mit einem Farbkippeffekt und in den Aussparungen (64) der Farbeindruck der ersten Reflexionsschicht (40) ohne Farbkippeffekt erkennbar ist, und bei Betrachtung des Sicherheitselements von der Seite des zweiten Sicherheitsmerkmals (22) her ein seitenvertauschtes beugungsoptisches Bild mit dem zweiten Farbeindruck erkennbar ist.

15. Sicherheitselement nach Anspruch 2 und wenigstens einem der Ansprüche 10 bis 14, **dadurch gekennzeichnet, dass** die erste Reflexionsschicht (40) und die Interferenzschicht (36, 38) deckungsgleiche Aussparungen (66) in Form von Mustern, Zeichen oder Codierungen aufweisen.

16. Sicherheitselement nach Anspruch 15, **dadurch gekennzeichnet, dass** bei Betrachtung des Sicherheitselements von der Seite des ersten Sicherheitsmerkmals (20) her in den nicht ausgesparten Bereichen ein beugungsoptisches Bild in Kombination mit einem Farbkippeffekt und in den Aussparungen (66) der Farbeindruck der zweiten Reflexionsschicht (44) ohne Farbkippeffekt erkennbar ist, und bei Betrachtung des Sicherheitselements von der Seite des zweiten Sicherheitsmerkmals (22) her ein seitenvertauschtes beugungsoptisches Bild mit dem zweiten Farbeindruck erkennbar ist.

17. Sicherheitselement nach wenigstens einem der Ansprüche 10 bis 16, **dadurch gekennzeichnet, dass** die erste Reflexionsschicht (40) und die zweite Reflexionsschicht (44) deckungsgleiche Aussparungen (62) in Form von Mustern, Zeichen oder Codierungen aufweisen

18. Sicherheitselement nach Anspruch 17, **dadurch gekennzeichnet, dass** bei Betrachtung des Sicherheitselements von der Seite des ersten Sicherheitsmerkmals (20) her ein beugungsoptisches Bild in Kombination mit einem Farbkippeffekt mit im Durchlicht transparenten oder semitransparenten Aussparungen (62) erkennbar ist, und bei Betrachtung des Sicherheitselements von der Seite des zweiten Sicherheitsmerkmals (22) her ein seitenvertauschtes beugungsoptisches Bild mit dem zweiten Farbeindruck mit im Durchlicht transparenten oder semitransparenten Aussparungen (62) erkennbar ist.

19. Sicherheitselement nach wenigstens einem der Ansprüche 10 bis 18, **dadurch gekennzeichnet, dass** die erste Reflexionsschicht (40) Aussparungen (68) in Form von Mustern, Zeichen oder Codierungen aufweist.

20. Sicherheitselement nach Anspruch 19, **dadurch gekennzeichnet, dass** bei Betrachtung des Sicherheitselements von der Seite des ersten Sicherheitsmerkmals (20) her ein beugungsoptisches Bild in Kombination mit einem Farbkippeffekt mit zusätzlichen Farbeffekten erkennbar ist, und bei Betrachtung des Sicherheitselements von der Seite des zweiten Sicherheitsmerkmals (22) her ein seitenvertauschtes beugungsoptisches Bild mit dem zweiten Farbeindruck erkennbar ist

21. Sicherheitselement nach wenigstens einem der Ansprüche 1 bis 20, **dadurch gekennzeichnet, dass** die flächigen Sicherheitsmerkmale (20, 22) auf einer gemeinsamen Trägerfolie (32), insbesondere einer transparenten Trägerfolie, aufgebracht sind.

22. Sicherheitselement nach wenigstens einem der Ansprüche 1 bis 21, **dadurch gekennzeichnet, dass** das Sicherheitselement einen Sicherheitsstreifen, einen Sicherheitsfaden (12), wie einen Fenstersicherheitsfaden oder einen Pendelsicherheitsfaden, bildet.

23. Sicherheitselement nach wenigstens einem der Ansprüche 1 bis 20, **dadurch gekennzeichnet, dass** das Sicherheitselement ein Transferelement (16) zum Aufbringen auf ein Sicherheitspapier, Wertdokument und dergleichen bildet, bei dem die flächigen Sicherheitsmerkmale (20, 22) über eine Trennschicht auf einer Transferfolie aufgebracht sind.

24. Sicherheitspapier für die Herstellung von Sicherheitsdokumenten, wie Banknoten, Ausweiskarten oder dergleichen, mit wenigstens einem durchgehenden Fensterbereich, der mit eimem Sicherheitselement (16) nach wenigstens einem der Ansprüche 1 bis 23 bedeckt ist, so dass im Fensterbereich die zwei flächigen Sicherheitsmerkmale (20, 22) bei Betrachtung von gegenüberliegenden Seiten her erkennbar sind.

25. Wertdokument, wie Banknote, Ausweiskarte oder dergleichen, mit wenigstens einem durchgehenden Fensterbereich (18), der mit einem Sicherheitselement (16) nach wenigstens einem der Ansprüche 1 bis 23 bedeckt ist, so dass im Fensterbereich die zwei flächigen Sicherheitsmerkmale (20, 22) bei Betrachtung von gegenüberliegenden Seiten her erkennbar sind.

26. Verwendung eines Sicherheitselements nach wenigstens einem der Ansprüche 1 bis 23, eines Sicherheitspapiers nach Anspruch 24, oder eines Wertdokuments nach Anspruch 25 zur Sicherung von Waren beliebiger Art.

27. Verfahren zur Herstellung eines flächigen Sicherheitselements für Sicherheitspapiere, Wertdokumente und dergleichen, mit folgenden Verfahrensschritten:
a) Herstellen einer Prägelackschicht mit einer flächigen Beugungsstruktur in Form eines Hologramms;
b) Aufbringen eines Dünnschichtelements mit Farbkippeffekt auf die Prägelackstruktur, welches eine erste Reflexionsschicht mit einer ersten Farbwirkung enthält, so dass sich die Beugungsstruktur der Prägelackschicht in Form eines Hologramms in dem Dünnschichtelement fortsetzt, und
c) Aufbringen einer zweiten Reflexionsschicht mit einer zweiten, von der ersten Farbwirkung verschiedenen Farbwirkung auf das Dünnschichtelement, so dass sich die Beugungsstruktur der Prägelackschicht und des Dünnschichtelements in Form eines Hologramms in der zweiten Reflexionsschicht fortsetzt.

28. Verfahren nach Anspruch 27, **dadurch gekennzeichnet, dass** beim Aufbringen des Dünnschichtelements nacheinander eine Absorberschicht, eine dielektrische Schicht und die erste Reflexionsschicht aufgebracht werden.

29. Verfahren nach Anspruch 27 oder 28, **dadurch gekennzeichnet, dass** die zweite Reflexionsschicht direkt auf die erste Reflexionsschicht aufgebracht wird.

30. Verfahren nach wenigstens einem der Ansprüche 27 bis 29, **dadurch gekennzeichnet, dass** in die zweite Reflexionsschicht und/oder in das Dünnschichtelement, insbesondere in die erste Reflexionsschicht des Dünnschichtelements, Aussparungen in Form von Mustern, Zeichen oder Codierungen eingebracht werden.

31. Verfahren zur Herstellung eines flächigen Sicherheitselements für Sicherheitspapiere, Wertdokumente und dergleichen, mit folgenden Verfahrensschritten:
α) Herstellen einer Prägelackschicht mit einer flächigen Beugungsstruktur in Form eines Hologramms,
β) Aufbringen einer Reflexionsschicht mit einer vorbestimmten Farbwirkung auf die Prägelackstruktur, so dass sich die Beugungsstruktur der Prägelackschicht in Form eines Hologramms in der Reflexionsschicht fortsetzt, und
χ) Aufbringen eines Dünnschichtelements mit Farbkippeffekt auf die Reflexionsschicht, welches eine weitere Reflexionsschicht mit einer weiteren, von der vorbestimmten Farbwirkung der zuerst aufgebrachten Reflexionsschicht verschiedenen Farbwirkung enthält, so dass sich die Beugungsstruktur der Prägelackschicht und der zuerst aufgebrachten Reflexionsschicht in Form eines Hologramms in dem Dünnschichtelement fortsetzt

32. Verfahren nach Anspruch 31, **dadurch gekennzeichnet, dass** beim Aufbringen des Dünnschichtelements nacheinander die weitere Reflexionsschicht, eine dielektrische Schicht und eine Absorberschicht aufgebracht werden.

33. Verfahren nach Anspruch 31 oder 32, **dadurch gekennzeichnet, dass** die weitere Reflexionsschicht direkt auf die zuerst aufgebrachte Reflexionsschicht aufgebracht wird.

34. Verfahren nach wenigstens einem der Ansprüche 31 bis 33, **dadurch gekennzeichnet, dass** in die zuerst aufgebrachte Reflexionsschicht und/oder in das Dünnschichtelement, insbesondere in die weitere Reflexionsschicht, Aussparungen in Form von Mustern, Zeichen oder Codierungen eingebracht werden.

## Claims

1. An areal security element for security papers, documents of value and the like, with at least two different areal security features (20, 22) disposed one above the other, which each are recognizable upon viewing the security element from opposite sides, wherein
- the first security feature (20) has a thin-layer element (42) provided with an areal diffraction structure (46) in the form of an hologram with color shift effect, which contains a first reflection layer (40) with a first color effect,
- the second security feature (22) has a second reflection layer (44) provided with an areal diffraction structure (46) in the form of a hologram for producing an optical diffractive image, which shows a second color effect different from the first color effect, and
wherein the thin-layer element (42) of the first security feature (20) and the reflection layer (44) of the second security feature (22) are provided with the same areal diffraction structure (46) in the form of a hologram.

2. The security element according to claim 1, **characterized in that** the thin-layer element (42) of the first security feature (20) besides the first reflection layer (40) contains an interference layer (36, 38) with color shift effect.

3. The security element according to claim 2, **characterized in that** the interference layer has at least one absorber layer (36) and at least one dielectric layer (38), which is disposed between the first reflection layer (40) and the absorber layer (36), preferably lies directly on the reflection layer (40).

4. The security element according to at least one of claims 1 to 3, **characterized in that** the first reflection layer (40) and/or the second reflection layer (44) is formed by a metal layer.

5. The security element according to claim 4, **characterized in that** the first and second reflection layer are formed by metals significantly differently reflecting in the visible spectral region.

6. The security element according to claim 4, **characterized in that** the first and second reflection layer (40, 44) are formed by metals of different colors.

7. The security element according to at least one of claims 1 to 6, **characterized in that** the first reflection layer (40) is formed by a metal of the group aluminum, silver or nickel and/or the second reflection layer (44) by a metal of the group copper, gold, iron or chromium.

8. The security element according to at least one of claims 1 to 7, **characterized in that** the first and second reflection layer (40, 44) are disposed directly one above the other.

9. The security element according to claim 8, **characterized in that** between the first and second reflection layer there is disposed a spacer layer, which preferably is transparent or semitransparent.

10. The security element according to at least one of claims 1 to 9, **characterized in that** the first and/or second security feature (20, 22) has gaps (60; 62; 64; 66; 68) in the form of patterns, characters or codings.

11. The security element according to claim 10, **characterized in that** the second reflection layer (44) has gaps (60) in the form of patterns, characters or codings.

12. The security element according to claim 11, **characterized in that** upon viewing the security element from the side of the first security feature (20) there is recognizable an optical diffractive image in combination with a color shift effect, and upon viewing the security element from the side of the second security feature (22) there is recognizable a laterally reversed optical diffractive image with the second color impression in the areas not provided with gaps and with the first color impression in the gaps (60).

13. The security element according to claim 2 and at least one of claims 10 to 12, **characterized in that** the interference layer (36, 38) has gaps (64) in the form of patterns, characters or codings.

14. The security element according to claim 13, **characterized in that** upon viewing the security element from the side of the first security feature (20) in the areas not provided with gaps there is recognizable an optical diffractive image in combination with a color shift effect and in the gaps (64) the color impression of the first reflection layer (40) without color shift effect, and upon viewing the security element from the side of the second security feature (22) there is recognizable a laterally reversed optical diffractive image with the second color impression.

15. The security element according to claim 2 and at least one of claims 10 to 14, **characterized in that** the first reflection layer (40) and the interference layer (36, 38) have congruent gaps (66) in the form of patterns, characters or codings.

16. The security element according to claim 15, **characterized in that** upon viewing the security element from the side of the first security feature (20) in the areas not provided with gaps there is recognizable an optical diffractive image in combination with a color shift effect and in the gaps (66) there is recognizable the color impression of the second reflection layer (44) without color shift effect, and upon viewing the security element from the side of the second security feature (22) there is recognizable a laterally reversed optical diffractive image with the second color impression.

17. The security element according to at least one of claims 10 to 16, **characterized in that** the first reflection layer (40) and the second reflection layer (44) have congruent gaps (62) in the form of patterns, characters or codings.

18. The security element according to claim 17, **characterized in that** upon viewing the security element from the side of the first security feature (20) there is recognizable an optical diffractive image in combination with a color shift effect with gaps (62) being transparent or semitransparent in transmitted light, and upon viewing the security element from the side of the second security feature (22) there is recognizable a laterally reversed optical diffractive image with the second color impression with gaps (62) being transparent or semitransparent in transmitted light.

19. The security element according to at least one of claims 10 to 18, **characterized in that** the first reflection layer (40) has gaps (68) in the form of patterns, characters or codings.

20. The security element according to claim 19, **characterized in that** upon viewing the security element from the side of the first security feature (20) there is recognizable an optical diffractive image in combination with a color shift effect with additional color effects, and upon viewing the security element from the side of the second security feature (22) there is recognizable a laterally reversed optical diffractive image with the second color impression.

21. The security element according to at least one of claims 1 to 20, **characterized in that** the areal security features (20, 22) are applied onto a common carrier foil (32), in particular a transparent carrier foil.

22. The security element according to at least one of claims 1 to 21, **characterized in that** the security element forms a security stripe, a security thread (12), such as a window security thread or a pendulum security thread.

23. The security element according to at least one of claims 1 to 20, **characterized in that** the security element forms a transfer element (16) for applying onto a security paper, document of value and the like, wherein the areal security features (20, 22) are applied via a separation layer onto a transfer foil.

24. A security paper for producing security documents, such as bank notes, ID cards or the like with at least one through window area which is covered with a security element (16) according to at least one of claims 1 to 23, so that in the window area the two areal security features (20, 22) are recognizable upon viewing from opposite sides.

25. A document of value, such as bank note, ID card or the like, with at least one through window area (18), which is covered with a security element (16) according to at least one of claims 1 to 23, so that in the window area the two areal security features (20, 22) are recognizable upon viewing from opposite sides.

26. A use of a security element according to at least one of claims 1 to 23, of a security paper according to claim 24, or of a document of value according to claim 25 for protecting goods of any kind.

27. A method for manufacturing an areal security element for security papers, documents of value and the like, with the following procedure steps:
a) manufacturing an embossing lacquer layer with an areal diffraction structure in the form of a hologram,
b) applying a thin-layer element with a color shift effect onto the embossing lacquer structure which contains a first reflection layer with a first color effect, so that the diffraction structure of the embossing lacquer layer continues to exist in the thin-layer element in the form of a hologram, and
c) applying a second reflection layer with a second color effect different from the first color effect onto the thin-layer element, so that the diffraction structure of the embossing lacquer layer and of the thin-layer element continues to exist in the second reflection layer in the form of a hologram.

28. The method according to claim 27, **characterized in that** with the application of the thin-layer element an absorber layer, a dielectric layer and the first reflection layer are successively applied.

29. The method according to claim 27 or 28, **characterized in that** the second reflection layer is applied directly onto the first reflection layer.

30. The method according to at least one of claims 27 to 29, **characterized in that** into the second reflection layer and/or into the thin-layer element, in particular into the first reflection layer of the thin-layer element, there are incorporated gaps in the form of patterns, characters or codings.

31. A method for manufacturing an areal security element for security papers, documents of value and the like, with the following procedure steps:
a) manufacturing an embossing lacquer layer with an areal diffraction structure in the form of a hologram,
β) applying a reflection layer with a predetermined color effect onto the embossing lacquer structure, so that the diffraction structure of the embossing lacquer layer continues to exist in the reflection layer in the form of a hologram, and
χ) applying a thin-layer element with color shift effect onto the reflection layer, which contains a further reflection layer with a further color effect different from the predetermined color effect of the reflection layer applied first, so that the diffraction structure of the embossing lacquer layer and of the reflection layer applied first continues to exist in the thin-layer element in the form of a hologram.

32. The method according to claim 31, **characterized in that** with the application of the thin-layer element the further reflection layer, a dielectric layer and an absorber layer are successively applied.

33. The method according to claim 31 or 32, **characterized in that** the further reflection layer is applied directly onto the reflection layer applied first.

34. The method according to at least one of claims 31 to 33, **characterized in that** into the reflection layer applied first and/or into the thin-layer element, in particular into the further reflection layer, there are incorporated gaps in the form of patterns, characters or codings.

## Revendications

1. Elément de sécurité plan pour papiers de sûreté, documents de valeur et pièces similaires, comprenant au moins deux caractéristiques de sécurité (20, 22) planes différentes agencées l'une au-dessus de l'autre qui sont respectivement reconnaissables lors d'une observation de l'élément de sécurité de côtés opposés,
- la première caractéristique de sécurité (20) comportant un élément en couche mince (42) à effet de changement des couleurs par basculement pourvu d'une structure de diffraction (46) plane en forme d'un hologramme, ledit élément en couche mince comprenant une première couche réfléchissante (40) provoquant un premier effet de couleur,
- la seconde caractéristique de sécurité (22) comportant une deuxième couche réfléchissante (44) pourvue d'une structure de diffraction (46) plane en forme d'un hologramme pour la génération d'une image optiquement diffractante, ladite deuxième couche réfléchissante présentant un deuxième effet de couleur différent du premier effet de couleur, et
l'élément en couche mince (42) de la première caractéristique de sécurité (20) et la couche réfléchissante (44) de la seconde caractéristique de sécurité (22) étant pourvus de la même structure de diffraction (46) plane en forme d'un hologramme.

2. Elément de sécurité selon la revendication 1, **caractérisé en ce que** l'élément en couche mince (42) de la première caractéristique de sécurité (20) comprend, en plus de la première couche réfléchissante (40), une couche interférentielle (36, 38) à effet de changement des couleurs par basculement.

3. Elément de sécurité selon la revendication 2, **caractérisé en ce que** la couche interférentielle comporte au moins une couche absorbeuse (36) et au moins une couche diélectrique (38) qui est agencée entre la première couche réfléchissante (40) et la couche absorbeuse (36), de préférence directement sur la couche réfléchissante (40).

4. Elément de sécurité selon au moins une des revendications de 1 à 3, **caractérisé en ce que** la première couche réfléchissante (40) et/ou la deuxième couche réfléchissante (44) est constituée par une couche métallique.

5. Elément de sécurité selon la revendication 4, **caractérisé en ce que** la première et la deuxième couche réfléchissante sont constituées par des métaux réfléchissant de manière sensiblement différente dans la plage spectrale visible.

6. Elément de sécurité selon la revendication 4, **caractérisé en ce que** la première et la deuxième couche réfléchissante (40, 44) sont constituées par des métaux de couleur différente.

7. Elément de sécurité selon au moins une des revendications de 1 à 6, **caractérisé en ce que** la première couche réfléchissante (40) est constituée par un métal du groupe aluminium, argent ou nickel et/ou **en ce que** la deuxième couche réfléchissante (44) est constituée par un métal du groupe cuivre, or, fer ou chrome.

8. Elément de sécurité selon au moins une des revendications de 1 à 7, **caractérisé en ce que** la première et la deuxième couche réfléchissante (40, 44) sont agencées directement l'une par-dessus l'autre.

9. Elément de sécurité selon la revendication 8, **caractérisé en ce qu'**une couche d'espacement de préférence transparente ou semi-transparente est agencée entre la première et la deuxième couche réfléchissante.

10. Elément de sécurité selon au moins une des revendications de 1 à 9, **caractérisé en ce que** la première et/ou la seconde caractéristique de sécurité (20, 22) comporte des évidements (60; 62; 64; 66; 68) en forme de motifs, signes ou codages.

11. Elément de sécurité la revendications 10, **caractérisé en ce que** la deuxième couche réfléchissante (44) comporte des évidements (60) en forme de motifs, signes ou codages.

12. Elément de sécurité selon la revendication 11, **caractérisé en ce que**, lors d'une observation de l'élément de sécurité du côté de la première caractéristique de sécurité (20), une image optiquement diffractante est reconnaissable en combinaison avec un effet de changement des couleurs par basculement, et **en ce que**, lors d'une observation de l'élément de sécurité du côté de la seconde caractéristique de sécurité (22), une image inversée optiquement diffractante est reconnaissable avec la deuxième impression de couleur dans les zones non évidées et avec la première impression de couleur dans les évidements (60).

13. Elément de sécurité selon la revendication 2 et au moins une des revendications de 10 à 12, **caractérisé en ce que** la couche interférentielle (36, 38) comporte des évidements (64) en forme de motifs, signes ou codages.

14. Elément de sécurité selon la revendication 13, **caractérisé en ce que**, lors d'une observation de l'élément de sécurité du côté de la première caractéristique de sécurité (20), une image optiquement diffractante en combinaison avec un effet de changement des couleurs par basculement est reconnaissable dans les zones non évidées, et l'impression de couleur de la première couche réfléchissante (40) est reconnaissable sans effet de changement des couleurs par basculement dans les évidements (64), et **en ce que**, lors d'une observation de l'élément de sécurité du côté de la seconde caractéristique de sécurité (22), une image inversée optiquement diffractante est reconnaissable avec la deuxième impression de couleur.

15. Elément de sécurité selon la revendication 2 et au moins une des revendications de 10 à 14, **caractérisé en ce que** la première couche réfléchissante (40) et la couche interférentielle (36, 38) comportent des évidements (66) congruents en forme de motifs, signes ou codages.

16. Elément de sécurité selon la revendication 15, **caractérisé en ce que**, lors d'une observation de l'élément de sécurité du côté de la première caractéristique de sécurité (20), une image optiquement diffractante en combinaison avec un effet de changement des couleurs par basculement est reconnaissable dans les zones non évidées, et l'impression de couleur de la deuxième couche réfléchissante (44) est reconnaissable sans effet de changement des couleurs par basculement dans les évidements (66), et **en ce que**, lors d'une observation de l'élément de sécurité du côté de la seconde caractéristique de sécurité (22), une image inversée optiquement diffractante est reconnaissable avec la deuxième impression de couleur.

17. Elément de sécurité selon au moins une des revendications de 10 à 16, **caractérisé en ce que** la première couche réfléchissante (40) et la deuxième couche réfléchissante (44) comportent des évidements (62) congruents en forme de motifs, signes ou codages.

18. Elément de sécurité selon la revendication 17, **caractérisé en ce que**, lors d'une observation de l'élément de sécurité du côté de la première caractéristique de sécurité (20), une image optiquement diffractante en combinaison avec un effet de changement des couleurs par basculement avec des évidements (62) transparents ou semi-transparents en lumière transmise est reconnaissable, et **en ce que**, lors d'une observation de l'élément de sécurité du côté de la seconde caractéristique de sécurité (22), une image inversée optiquement diffractante est reconnaissable avec la deuxième impression de couleur avec des évidements (62) transparents ou semi-transparents en lumière transmise.

19. Elément de sécurité selon au moins une des revendications de 10 à 18, **caractérisé en ce que** la première couche réfléchissante (40) comporte des évidements (68) en forme de motifs, signes ou codages.

20. Elément de sécurité selon la revendication 19, **caractérisé en ce que**, lors d'une observation de l'élément de sécurité du côté de la première caractéristique de sécurité (20), une image optiquement diffractante en combinaison avec un effet de changement des couleurs par basculement avec des effets supplémentaires de couleurs est reconnaissable, et **en ce que**, lors d'une observation de l'élément de sécurité du côté de la seconde caractéristique de sécurité (22), une image inversée optiquement diffractante est reconnaissable avec la deuxième impression de couleur.

21. Elément de sécurité selon au moins une des revendications de 1 à 20, **caractérisé en ce que** les caractéristiques de sécurité (20, 22) planes sont appliquées sur une feuille-support (32) commune, notamment sur une feuille-support transparente.

22. Elément de sécurité selon au moins une des revendications de 1 à 21, **caractérisé en ce que** l'élément de sécurité constitue un ruban de sécurité, un fil de sécurité (12), tel qu'un fil de sécurité à fenêtre ou un fil de sécurité oscillant.

23. Elément de sécurité selon au moins une des revendications de 1 à 20, **caractérisé en ce que** l'élément de sécurité constitue un élément de transfert (16) pour application sur un papier de sûreté, document de valeur et autre pièce similaire, élément de transfert dans lequel les caractéristiques de sécurité (20, 22) planes sont appliquées par-dessus une couche de séparation sur une feuille de transfert.

24. Papier de sûreté pour la fabrication de documents de sécurité tels que billets de banque, cartes d'identité ou autres pièces similaires, comportant au moins une zone fenêtre traversante recouverte par un élément de sécurité (16) selon au moins une des revendications de 1 à 23, de telle sorte que, lors d'une observation de côtés opposés, les deux caractéristiques de sécurité (20, 22) planes sont reconnaissables dans la zone fenêtre.

25. Document de valeur, tel que billet de banque, carte d'identité ou autre pièce similaire, comportant au moins une zone fenêtre (18) traversante recouverte par un élément de sécurité (16) selon au moins une des revendications de 1 à 23, de telle sorte que, lors d'une observation de côtés opposés, les deux caractéristiques de sécurité (20, 22) planes sont reconnaissables dans la zone fenêtre.

26. Utilisation d'un élément de sécurité selon au moins une des revendications de 1 à 23, d'un papier de sûreté selon la revendication 24, ou d'un document de valeur selon la revendication 25 pour la sécurisation de marchandises de nature quelconque.

27. Procédé de fabrication d'un élément de sécurité plan pour papiers de sûreté, documents de valeur et pièces similaires, comprenant les étapes de procédé suivantes :
a) confection d'une couche de vernis d'estampage comportant une structure de diffraction plane en forme d'un hologramme,
b) application d'un élément en couche mince à effet de changement des couleurs par basculement sur la structure en vernis d'estampage, ledit élément en couche mince comportant une première couche réfléchissante avec un premier effet de couleur, de telle sorte que la structure de diffraction en forme d'un hologramme de la couche de vernis d'estampage se poursuit dans l'élément en couche mince, et
c) application sur l'élément en couche mince d'une deuxième couche réfléchissante ayant un deuxième effet de couleur différent du premier effet de couleur, de telle sorte que la structure de diffraction en forme d'un hologramme de la couche de vernis d'estampage et de l'élément en couche mince se poursuit dans la deuxième couche réfléchissante.

28. Procédé selon la revendication 27, **caractérisé en ce que**, lors de l'application de l'élément en couche mince, une couche absorbeuse, une couche diélectrique et la première couche réfléchissante sont appliquées l'une après l'autre.

29. Procédé selon la revendication 27 ou 28, **caractérisé en ce que** la deuxième couche réfléchissante est appliquée directement sur la première couche réfléchissante.

30. Procédé selon au moins une des revendications de 27 à 29, **caractérisé en ce que** des évidements en forme de motifs, signes ou codages sont pratiqués dans la deuxième couche réfléchissante et/ou dans l'élément en couche mince, notamment dans la première couche réfléchissante de l'élément en couche mince.

31. Procédé de fabrication d'un élément de sécurité plan pour papiers de sûreté, documents de valeur et pièces similaires, comprenant les étapes de procédé suivantes :
α) confection d'une couche de vernis d'estampage comportant une structure de diffraction plane en forme d'un hologramme,
β) application d'une couche réfléchissante ayant un effet de couleur prédéterminé sur la structure en vernis d'estampage, de telle sorte que la structure de diffraction en forme d'un hologramme de la couche de vernis d'estampage se poursuit dans la deuxième couche réfléchissante, et
χ) application d'un élément en couche mince à effet de changement des couleurs par basculement sur la couche réfléchissante, ledit élément en couche mince comportant une couche réfléchissante supplémentaire ayant un effet de couleur supplémentaire différent de l'effet de couleur prédéterminé de la couche réfléchissante préalablement appliquée, de telle sorte que la structure de diffraction en forme d'un hologramme de la couche de vernis d'estampage et de la couche réfléchissante préalablement appliquée se poursuit dans l'élément en couche mince.

32. Procédé selon la revendication 31, **caractérisé en ce que**, lors de l'application de l'élément en couche mince, la couche réfléchissante supplémentaire, une couche diélectrique et une couche absorbeuse sont appliquées l'une après l'autre.

33. Procédé selon la revendication 31 ou 32, **caractérisé en ce que** la couche réfléchissante supplémentaire est appliquée directement sur la couche réfléchissante préalablement appliquée.

34. Procédé selon au moins une des revendications de 31 à 33, **caractérisé en ce que** des évidements en forme de motifs, signes ou codages sont pratiqués dans la couche réfléchissante préalablement appliquée et/ou dans l'élément en couche mince, notamment dans la couche réfléchissante supplémentaire.
